(19) **Europäisches Patentamt / European Patent Office / Office européen des brevets**

(11) **EP 2 237 463 B1**

(12) **EUROPEAN PATENT SPECIFICATION**

(45) Date of publication and mention
of the grant of the patent:
**13.11.2013 Bulletin 2013/46**

(51) Int Cl.:
*H04L 1/00* (2006.01)  *H04L 1/06* (2006.01)
*H04L 25/03* (2006.01)  *H04B 7/08* (2006.01)

(21) Application number: **10003498.2**

(22) Date of filing: **31.03.2010**

(54) **Communication system with a diversity receiver operating with adaptive modulation**

Kommunikationssystem mit einem Diversitätsempfänger, der mit adaptiver Modulation arbeitet

Système de communication avec un récepteur en diversité opérant avec modulation adaptative

(84) Designated Contracting States:
**AT BE BG CH CY CZ DE DK EE ES FI FR GB GR
HR HU IE IS IT LI LT LU MC MK MT NL NO PL
PT RO SE SI SK SM TR**

(30) Priority: **02.04.2009 IT BG20090013**

(43) Date of publication of application:
**06.10.2010 Bulletin 2010/40**

(73) Proprietor: **SIAE Microelettronica S.p.A.
20093 Cologno Monzese (MI) (IT)**

(72) Inventor: **Rossi, Leonardo
29100 Piacenza (IT)**

(74) Representative: **Gatti, Enrico et al
Via E. Zambianchi, 3
24121 Bergamo (IT)**

(56) References cited:
EP-A1- 0 631 399   EP-A1- 2 015 468
EP-A2- 0 902 556   WO-A1-01/45300

• SUZUKI T ET AL: "Directive antennas diversity reception for an adaptive modulation system in land mobile communications" 1995 FOURTH IEEE INTERNATIONAL CONFERENCE ON UNIVERSAL PERSONAL COMMUNICATIONS, HELD IN TOKYO., vol. CONF. 4, 6 November 1995 (1995-11-06) , - 10 November 1995 (1995-11-10) pages 595-599, XP010160609 New York, NY, USA ISBN: 978-0-7803-2955-3
• CRIVELLI D E ET AL: "Adaptive digital equalization in the presence of chromatic dispersion, PMD, and phase noise in coherent fiber optic systems" IEEE GLOBAL TELECOMMUNICATIONS CONFERENCE (GLOBECOM) 2004, HELD IN DALLAS, TX, USA., vol. 4, 29 November 2004 (2004-11-29), pages 2545-2551, XP010757986 Piscataway, NJ, USA ISBN: 978-0-7803-8794-2
• KOYAMA T ET AL: "A multi-dimensional equalizer for gigabit ethernet" IEEE INTERNATIONAL CONFERENCE ON COMMUNICATIONS (ICC) 2001, HELD IN HELSINKY, FINLAND, vol. 2, 11 June 2001 (2001-06-11), - 14 June 2001 (2001-06-14) pages 509-512, XP010553055 New York, NY, USA ISBN: 978-0-7803-7097-5

**Description**

The present invention relates to a protection system for adaptive modulation digital radio links operating with diversity, and to the relative method.

In point-to-point radio link systems, connections must sometimes be made requiring high appliance performance to counteract problems due to transmission channel deterioration, especially due to echoes and supplementary attenuations by multi-trajectories.

To obtain this performance, adaptive (or variable) modulation systems are for example used in which the modulation type is changed in relation to the quality state of the channel. Under normal propagation conditions, the modulation used is that able to transport the greatest information quantity: if the channel then encounters degraded propagation conditions the modulation is changed to lesser complexity types more robust towards noise.

It is also usual to use space and/or frequency diversity systems. This implies the transmission of more radio signals carrying the same information or at least the production at the reception end of a multiplicity of radio signals carrying the same information. See, for instance, prior art document EP 2 015 468.

Various methods are used on this multiplicity of received signals to best reconstruct the original information.

Channels are changed, choosing that giving the best result, or a combination of channels is used.

Switching between channels is done by systems such as to present, as switched output, a continuity of data flow decoding which is not influenced by errors due to switching, this being hence defined as "hitless".

The hitless method encounters cost and processing complications if the radio link system is also of the adaptive modulation type.

In this respect, if the quality of the channel being used decreases, the channel does not have to be changed if an applicable lower modulation exists, the quality of which is however higher than that of the remaining channels, which could be under even worse conditions.

Moreover, if there is a sudden fault in the channel being used, and which can happen either in transmission or in the initial reception stages prior to the demodulator, the hitless method does not guarantee a continuous flow of output data, in that switching occurs after fault detection and after the alignment.

An object of the present invention is to provide a protection system for adaptive modulation digital radio links operating with diversity, which does not suffer from the drawbacks of the known art,

Another object is to provide a baseband combination of received signals which is simple to implement, while at the same time achieving considerable performance.

These and other objects are attained according to the present invention by a protection system and method for adaptive modulation digital radio links in accordance with the accompanying claim.

According to the present invention, the transmitting channels are maintained at the same modulation and carrying the same information packets while ignoring the individual conditions of the actual physical radio frequency channel. This is achieved by virtue of a single adaptive modulation control signal, which controls it in accordance with already known criteria existing in the case of a non-redundant channel.

In addition, hitless switching is not required, hence synchronism alignments between channels are not necessary.

Even an unexpected fault in one of the two channels does not prevent the combiner from providing a combined output signal, the combiner having continuously used the signal which has remained integral following the fault, hence without the need for those alignment alarm signals which are required for a traditional hitless switching system.

Hence a very simplified protection system is obtained.

The characteristics and advantages of the present invention will be apparent from the ensuing detailed description of one embodiment thereof, illustrated by way of non-limiting example in the accompanying drawings, in which:

Figure 1 shows schematically a radio link, in accordance with the present invention;
Figure 2 shows schematically a detail of the radio link of Figure 1, relative to a baseband combiner and relative adaptive modulation command for the modulators, in accordance with the present invention.

With reference to the accompanying figures, a radio link of the present invention comprises, on the transmission side, a packet data source 10 connected to a packet control block 11 in which the packets are classified in accordance with an importance hierarchy, which establishes which packets can be lost during the course of the degradation period.

The signal is then transferred to the block 12, which then passes the data flow to the individual adaptive modulation transmission systems.

The block 12 comprises a divider 13 for routing the same signal to the modulators 14 and 15.

The modulators 14 and 15 each comprise an adaptive modulation (ACM), and are connected to a transmitting and radiant system 17, with diversity.

The modulators 14 and 15 comprise a single command signal 51 for the adaptive modulation, for example passing through 4/16/64QAM, based on the propagation conditions available at any moment.

On the reception side, the radio link of the present invention comprises a receiver system 20.

The receiver system 20 feeds the reception block 21.

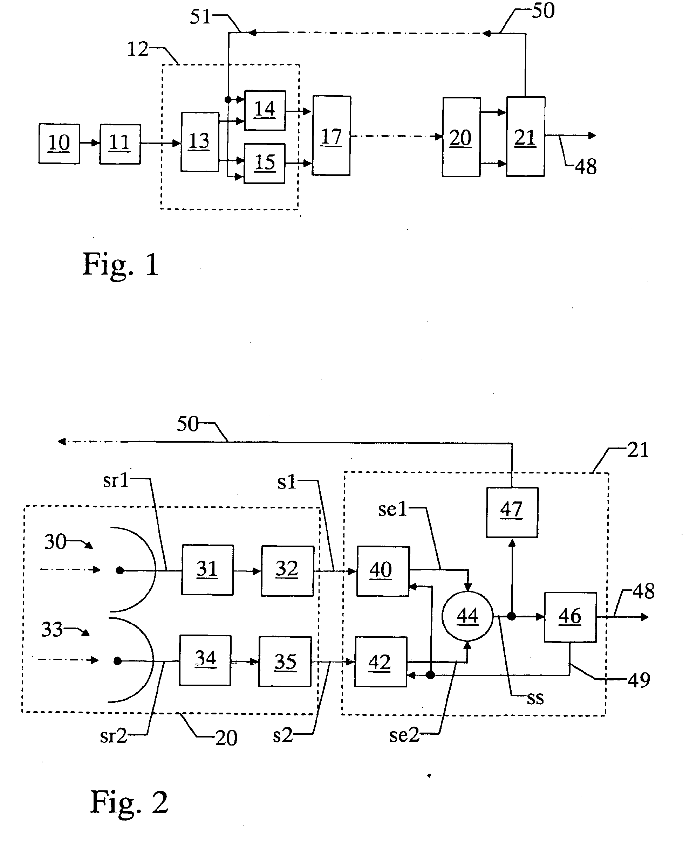

Figure 2 is a schematic detailed view of the receiver system 20, and of the reception block 21 which comprises a baseband combiner.

A receiver antenna 30, receiving a radio frequency signal sr1, is connected to a receiver 31 and then to a demodulator 32, which supplies a demodulated signal s1 to an equalizer 40.

A receiver antenna 33, separated from the antenna 32 in the case of space diversity, and receiving a radio frequency signal sr2, is connected to a receiver 34 and then to a demodulator 35, which supplies a demodulated signal s2 to an equalizer 42.

The output signals se1 and se2 from the equalizers 40 and 42 are connected to an adder 44.

The output signal ss from the adder 44 is connected to a decision circuit 46, and to a single modulation controller 47.

The decision circuit 46 has an output 48 for the decided data and an output 49, at which the calculated error value err is present, and is connected to the equalizers 40 and 42. The error value err is used as feedback control for the four-dimension coefficients of the equalizers 40 and 42, and is used to update them.

The equalizers 40 and 42 are four-dimension (4D) adaptive equalizers corresponding to a transverse structure having an adaptation of the four-dimension (complex) coefficients and with symbol spacing or less.

The demodulators 32 and 35 supply the baseband demodulated signals inclusive of synchronism recovery, and possibly use known methods to oppose channel distortions due to multi-trajectories. The demodulator output supplies independently, i.e. without the need for feedback, in the form of symbol periods, the best possible individual reconstruction succession of transmitted signals, containing any noise present.

The operation of the system according to the invention is apparent from that described and illustrated, and is essentially as follows.

The same information is supplied to the modulators 14 and 15, hence the radio frequency signals sr1 and sr2 are received with diversity, but carry the same information.

There is single adaptive modulation control, this being by the signal 50 generated by the modulation controller 47, which is fed at 51 to the modulators 14 and 15. A single command signal 51 is used for the two modulators present.

This information is normally fed together with other service information by a return connection not explicitly shown.

Hence modulation is identical for each modulator present in the radio link, i.e. the channels with diversity have the same type of modulation.

To determine the choice of modulation type, the quality of the output signal from the demodulators is not evaluated, but instead that substantially improved with respect to it, by virtue of the intrinsic fact given by the combined sum of the signals. This improvement also exists in the case of lack of diversification in the quality of the individual signals, as in the case of rain. In this respect it is mathematically known that the sum of the amplitude of two replicas of the same signal, affected by independent Gaussian thermal noises, adds the noises only in terms of their mean power, hence at the end incrementing the signal/noise ratio.

Following the use of the equalizers 40-42, a combined signal of the signals received by the receiver antennas 30 and 33 is present at the output 48.

At the transmitter just a single modulator and a single transmitter could be present, the spatial diversity being implemented at the receiver by several antennas.

The demodulated signal succession enters the equalizers, which consist of a four dimension FIR (finite impulse response) filter with variable coefficients and with symbol spacing or less. These are able to supply an output signal equivalent (recalculated) to the input signal modified by a time displacement, a level variation and a phase rotation.

In the case of modulation in quadrature, the adder adds both the real parts and the imaginary parts of the signals together.

The output of the adder 44 is fed to the decision block 46 and to the modulation controller 47.

The modulation controller 47 evaluates the received signal quality to determine which type of modulation to use, and feeds a single signal 50. The signal 51, received by the transmitter side, is used for both modulators 14 and 15, such that these have the same type of modulation.

Advantageously, the equalizers 40-42 can be of simple classic structure and single spacing, i.e. not FSE (fractionally spaced equalizer) but processing a single sample per symbol period. The particular operation does not require the spacing of coefficients to be less than the symbol time.

Hence each coefficient C of the 4D equalizer, when in the time delay position m, is a vector defined according to the known art by:

$$c_m = [c_m^{11}; c_m^{22}; jc_m^{12}; jc_m^{21}]$$

and at time (n+1)*T it can be updated, by way of example, using the error calculated as:

$$c_{(n+1)T}^{11} = c_{nT}^{11} - stsz * \mathrm{Re}(\mathrm{err}_{(n+1)T}) * \mathrm{Re}(s1)$$

$$c_{(n+1)T}^{22} = c_{nT}^{22} - stsz * \mathrm{Im}(\mathrm{err}_{(n+1)T}) * \mathrm{Im}(s1)$$

$$c_{(n+1)T}^{12} = c_{nT}^{12} - stsz * \mathrm{Im}(\mathrm{err}_{(n+1)T}) * \mathrm{Re}(s1)$$

$$c_{(n+1)T}^{21} = c_{nT}^{21} - stsz * \mathrm{Re}(\mathrm{err}_{(n+1)T}) * \mathrm{Im}(s1)$$

where:

stsz is a constant compression factor (for example $10^{-5}$) err is the calculation error at time (n+1)T, this operation is to be repeated for each signal s1 and s2.

The position index m has been omitted, hence meaning that the updating of the position coefficient uses the time delay sample of the position m of the signal s, in accordance with the known equalizer art.

The complex output signal se1 (and likewise the output signal se2) from the 4D equalizer is then defined as:

$$\mathrm{Re}(se1_n) = \sum_i^{p} c_i^{11} \mathrm{Re}(s1_{n-i}) + \sum_i^{p} c_i^{21} \mathrm{Im}(s1_{n-i})$$

$$\mathrm{Im}(se1_n) = \sum_{-p}^{p} {}_i c_i^{22} \mathrm{Im}(s1_{n-i}) + \sum_{-p}^{p} {}_i c_i^{12} \mathrm{Re}(s1_{n-i})$$

The subscript n means the sampling time n, the subscript i means the coefficient position, and the extremes -p and p of the summation are the overall number of coefficients.

The decision circuit 46 calculates the error err on which the functional is based, to be used for updating the coefficients.

An example of a minimizable functional in the error calculation by the MSE (mean square error) method is the following:

$$\mathrm{Re(err)} = \mathrm{(Re(sc)\text{-}Re(sd)}$$

$$\mathrm{Im(err)} = \mathrm{Im(s)\text{-}Im(sd)}$$

where:

sc is the combined signal and sd the so-called decided signal.

This system is not further described in detail herein as an expert of the art, based on the aforegoing, is able to implement it in accordance with known constructional details and the specific requirement.

**Claims**

1. A method for adaptive modulation digital radio links operating with diversity, comprising the steps of:

modulating a signal carrying the information by means of at least one modulator, wherein said at least one modulator is an adaptive modulator;

transmitting the modulated signal;

receiving the transmitted signal with diversity and supplying a first (sr1) and a second (sr2) signals carrying the same information;

demodulating said first signal (sr1) and supplying a first demodulated signal (s1);

demodulating said second signal (sr2) and supplying a second demodulated signal (s2);

equalizing said first demodulated signal (s1) by means of a first adaptive equalizer (40) and supplying a first equalized signal (se1);

equalizing said second demodulated signal (s2) by means of a second adaptive equalizer (42) and supplying a second equalized signal (se2);

adding said first (se1) and said second (se2) equalized signals to supply a single summation signal (ss);

using said summation signal (ss) to calculate an error signal (49) and supplying it to said first (40) and second (42) adaptive equalizers,

said first (40) and second (42) adaptive equalizers comprising a four-dimension equalizer corresponding to a transverse structure having an adaptation of the four-dimension coefficients, wherein

said error signal (49) is to be used for updating said four-dimension coefficients, and

said first equalized signal (se1) and likewise said second equalized signal (se2) is defined as:

$$\mathrm{Re}(se1_n) = \sum_{-p}^{p} c_i^{11} \mathrm{Re}(s1_{n-i}) + \sum_{-p}^{p} c_i^{21} \mathrm{Im}(s1_{n-i})$$

$$\mathrm{Im}(se1_n) = \sum_{-p}^{p} c_i^{22} \mathrm{Im}(s1_{n-i}) + \sum_{-p}^{p} c_i^{12} \mathrm{Re}(s1_{n-i})$$

wherein

n is the sampling time,

i is the coefficient position,

the extremes -p and p indicate the range of all the coefficients,

$se1_n$ is the complex output signal of the first equalizer,

$s1_n$ is the complex input signal of the first equalizer,

and the coefficients are updated using the calculated error;

deriving a single modulation control signal (50, 51) from said summation signal (ss) and feeding said single modulation control signal (50, 51) back to said at least one modulator (14,15) to determine witch type of adaptive modulation has to be used.

**Patentansprüche**

1. Verfahren zur adaptiven Modulation digitaler Funkverbindungen, die mit Diversität betrieben werden, mit den Schritten:

Modulieren eines Signals, das die Information trägt, mit Hilfe mindestens eines Modulators, wobei der mindestens eine Modulator ein adaptiver Modulator ist;

Senden des modulierten Signals;

Empfangen des gesendeten Signals mit Diversität und Liefern eines ersten (sr1) und eines zweiten (sr2) Signals, die die gleiche Information tragen;

Demodulieren des ersten Signals (sr1) und Liefern eines ersten demodulierten Signals (s1);

Demodulieren des zweiten Signals (sr2) und Liefern eines zweiten demodulierten Signals (s2);

Entzerren des ersten demodulierten Signals (s1) mit Hilfe eines ersten adaptiven Entzerrers (40) und Liefern eines ersten entzerrten Signals (se1);

Entzerren des zweiten demodulierten Signals (s2) mit Hilfe eines zweiten adaptiven Entzerrers (42) und Liefern eines zweiten entzerrten Signals (se2);

Addieren des ersten (se1) und des zweiten (se2) entzerrten Signals, um ein einziges Summensignal (ss) zu liefern;

Verwenden des Summensignals (ss), um ein Fehlersignal (49) zu berechnen, und Liefern dieses Signals zu dem ersten (40) und zweiten (42) adaptiven Entzerrer,

wobei der erste (40) und zweite (42) adaptive Entzerrer einen vierdimensionalen Entzerrer enthalten, der einer transversen Struktur mit einer Adaption der vierdimensionalen Koeffizienten entspricht, wobei

das Fehlersignal (49) verwendet wird, um die vierdimensionalen Koeffizienten zu aktualisieren, und

wobei das erste entzerrte Signal (se1) und auf ähnliche Weise das zweite entzerrte Signal (se2) definiert sind als

$$\mathrm{Re}(se1_n) = \sum_{-p}^{p} c_i^{11} \mathrm{Re}(s1_{n-i}) + \sum_{-p}^{p} c_i^{21} \mathrm{Im}(s1_{n-i})$$

$$\mathrm{Im}(se1_n) = \sum_{-p}^{p} c_i^{22} \mathrm{Im}(s1_{n-i}) + \sum_{-p}^{p} c_i^{12} \mathrm{Re}(s1_{n-i})$$

wobei

$n$ die Abtastzeit ist,

$i$ die Koeffizientenposition ist,

die Grenzen $-p$ und $p$ den Bereich von allen diesen Koeffizienten angeben,

$se1_n$ das komplexe Ausgangssignal des ersten Entzerrers ist,

$s1_n$ das komplexe Eingangssignal des ersten Entzerrers ist,

und die Koeffizienten unter Verwendung des berechneten Fehlers aktualisiert werden;

Ableiten eines einzigen Modulationssteuersignals (50, 51) von dem Summensignal (ss) und Zuführen des einzigen Modulationssteuersignals (50, 51) zurück zu dem mindestens einen Modulator (14, 15), um zu bestimmen, welcher Typ von adaptiver Modulation verwendet wurde.

## Revendications

1. Procédé pour des liens radio numériques à modulation adaptative fonctionnant avec de la diversité, comprenant les étapes consistant à :

moduler un signal porteur de l'information par l'intermédiaire d'au moins un modulateur, dans lequel ledit au moins un modulateur est un modulateur adaptatif ;

transmettre le signal modulé ;

recevoir le signal transmis avec de la diversité et fournir un premier signal (sr1) et un second signal (sr2) transportant la même information ;

démoduler ledit premier signal (sr1) et fournir un premier signal démodulé (s1) ;

démoduler ledit second signal (sr2) et fournir un second signal démodulé (s2) ;

égaliser ledit premier signal démodulé (s1) au moyen d'un premier égaliseur adaptatif (40) et fournir un premier signal égalisé (se1) ;

égaliser ledit second signal démodulé (s2) au moyen d'un second égaliseur adaptatif (42) et fournir un second signal égalisé (se2) ;

ajouter ledit premier (se1) et ledit second signal égalisé (se2) pour fournir un signal de sommation unique (ss) ;

utiliser ledit signal de sommation (ss) pour calculer un signal d'erreur (49) et le fournir auxdits premier (40) et second (42) égaliseurs adaptatifs,

lesdits premier (40) et second (42) égaliseurs adaptatifs comprenant un égaliseur à quatre dimensions correspondant à une structure transversale comportant une adaptation des coefficients à quatre dimensions, dans lequel ledit signal d'erreur (49) est destiné à être utilisé pour mettre à jour lesdits coefficients à quatre dimensions, et

ledit premier signal égalisé (se1) et également ledit second signal égalisé (se2) sont définis selon la formule suivante :

$$\mathrm{Re}(se1_n) = \sum_{-p}^{p} c_i^{11} \mathrm{Re}(s1_{n-i}) + \sum_{-p}^{p} c_i^{21} \mathrm{Im}(s1_{n-i})$$

$$\mathrm{Im}(se1_n) = \sum_{-p}^{p} c_i^{22} \mathrm{Im}(s1_{n-i}) + \sum_{-p}^{p} c_i^{12} \mathrm{Re}(s1_{n-i})$$

dans laquelle
n est égal au temps d'échantillonnage,
i est la position du coefficient,
les extrêmes -p et p indiquent l'étendue de l'ensemble des coefficients,
$se1_n$ est le signal de sortie complexe du premier égaliseur,
$s1_n$ est le signal d'entrée complexe du premier égaliseur,
et les coefficients sont mis à jour en utilisant l'erreur calculée ;
dériver un signal de commande de modulation unique (50, 51) à partir dudit signal de sommation (ss) et retourner ledit signal de commande de modulation unique (50, 51) audit au moins un modulateur (14, 15) pour déterminer quel type de modulation adaptative doit être utilisé.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2015468 A